# EUROPEAN PATENT SPECIFICATION

(11) **EP 0 314 825 B1**
(45) Date of publication and mention of the grant of the patent: **17.02.1993**
(21) Application number: 87116160.0
(22) Date of filing: 03.11.1987
(51) Int. Cl.: C08F 2/32, C08F 6/00, A61L 15/00

(54) **Aqueous fluid absorbent polymer beads, process for preparing the same and suspending agent employed therein**
Wasserabsorbierende Polymerperlen, Verfahren zu deren Herstellung und Suspendiermittel, die dabei verwendet werden
Polymères en forme de perles absorbant l'eau, procédé de leur préparation et émulsifiant employé dans ce procédé

(43) Date of publication of application: 10.05.1989
(73) Proprietor: THE DOW CHEMICAL COMPANY, Midland Michigan 48640-1967 (US)
(72) Inventor: Tai, Eva F., Midland Michigan 48640 (US); Stanley, Frederick W., Jr., Midland Michigan 48640 (US); Lamphere, Jack C., Midland Michigan 48640 (US); Chonde, Yohannes, Midland Michigan 48640 (US)
(74) Representative: Sternagel, Hans-Günther, Dr.

(56) References cited:
- DE-B- 3 613 081
- US-A- 2 982 749
- US-A- 4 524 175

## Description

This invention relates to suspension polymerization processes, to aqueous fluid-absorbing polymer beads produced from those processes, to suspending agents employed in said process and to a method of using wetting agents to improve the hydration rate of the aqueous fluid absorbing polymer beads.

Various water-soluble polymers such as polyacrylamide and copolymers of acrylamide with other anionic, cationic or nonionic monomers are well-known to be precipitants or flocculants for many substrates including sewage, cellulosic fibers and fines for retention and freeness, effluent waste for metal production and coal tailings. Such polymers are also known to exhibit superior thickening properties when said polymers are dissolved in aqueous media. Particularly well known for this purpose are the anionic polyacrylamides such as acrylamide/acrylic acid copolymers, including those prepared by hydrolysis of polyacrylamide. Such polymers are also very useful as fluid mobility control agents in enhanced oil recovery processes.

In the past, water-soluble polymers have been made available commercially as powders or finely divided solids which are dissolved in an aqueous medium in order to be used. Because such dissolution steps are sometimes time consuming and often require rather expensive mixing equipment, it has become a common practice to formulate the water-soluble polymers in water-in-oil emulsions wherein the polymer is dissolved in the dispersed aqueous phase. Such emulsions, as well as methods for preparing them, are described in U.S. Patents 3,284,393; 3,826,771 and 4,052,353.

More recently, water-swellable polymers which absorb aqueous fluids have been sought. These aqueous fluid absorbents are conveniently prepared by polymerizing water-soluble monomers such as acrylic acid in the presence of a crosslinking agent in order to provide highly swellable polymeric materials. Such water-swellable polymers have been used in articles which absorb body fluids such as sanitary napkins, incontinent devices and disposable baby diapers. Such types of aqueous fluid absorbents (water-swellable polymers) and materials provided therefrom are disclosed in U.S. Patents 4,511,477; 4,500,670; 4,424,247; and 4,293,609.

Suspension polymerization processes provide several advantages in the preparation of water-soluble polymers and water-swellable polymers. The reaction temperature and rate of reaction can be controlled due to the heat transfer properties attendant in such types of polymerization processes. For example, the reaction temperature can be controlled by means of ebullient cooling. In addition, the polymer product so provided in water-in-oil suspension polymerization processes can be conveniently separated from the oil phase using relatively efficient and cost-effective techniques such as filtration or centrifugation because such polymer is shaped like a bead. Unfortunately, a suspension polymerization process for such water-swellable polymers can cause a reduced hydration rate or decreased hydrophilicity, of the resulting water-swellable polymer beads. Therefore, improvements in the preparation of water-swellable polymers is clearly desirable.

U.S. patent No. 2,982,749 concerns a polymerization process in which an aqueous solution of a water-soluble unsaturated monomer is suspended in an oil phase and polymerized therein to give polymeric products in bead form.

The oil phase can be an inert hydrophobic liquid which can be separated readily from the polymeric product. Of such liquids the hydrocarbons and chlorinated hydrocarbons such as toluene, xylene, o-dichlorobenzene, monochlorobenzene, propylene dichloride, carbon tetrachloride, are advantageously used.

In general, any inert finely divided solid or high molecular weight polymer can be converted to a water-in-oil suspending agent by first determining how it distributes itself when shaken with a mixture of the oil and the aqueous phase to be suspended. If the suspending agent goes entirely into either the oil or the aqueous phase, it is either too strongly hydrophobic or too strongly hydrophilic, and requires surface treatment with a hydrophilic substance in the first case and with a hydrophobic substance in the second case.

Surfactants in suspension polymerizations of water-swellable polymers have been shown to be useful during polymerizations, for example, in U.S. Patent No. 4,446,261. Such surfactants have also been introduced in post polymerization additions or during polymerization additions for example in U.S. Patent Nos. 4,459,396 and 4,270,977.

DE-A-3 613 081 teaches the use of silanized silicas in combination with non-ionic surfactants as suspending agents to produce polymeric products in bead form.

The use of these nonionic, ionic and cationic surfactants may improve the hydration rate of the water-swellable polymer but they can inhibit the fluid absorbency of the resulting fluid absorbent device in which the water-swellable polymers are incorporated. For example, surfactants may interfere with the desired wicking of fluids by fibers in the absorbent structure of a disposable diaper.

In view of the deficiencies of the prior art, it would be highly desirable to provide an improved process for polymerizing water-soluble monomers using water-in-oil suspension polymerization techniques; which process is capable of employing high concentrations of monomer in the aqueous phase without substantial agglomeration of polymer, and which process can be employed in providing crosslinked water-swellable polymers of a controlled particle size resulting in a polymer bead.

Accordingly, it would also be desirable to improve the hydration rate of the polymer beads once polymerized from a suspension polymerization process without decreasing the hydration rate of the resultant fluid absorbing device which can be accomplished by using a wetting agent which does not reduce the surface tension of a supernate (provided by a standard test method described herein below) below 56 dynes/cm.

The present invention is a suspending agent useful in suspension polymerization processes, said suspending agent comprising (1) a particulate material comprising a hydrophobic character, and (2) a polymer having a substantially hydrophobic character said polymer having hydrophobic moieties pendant from the backbone thereof.

The aforementioned suspending agent is particularly useful in water-in-oil suspension polymerization processes.

In another aspect, the present invention is an oil phase useful in water-in-oil suspension polymerization processes, said oil phase comprising the aforementioned suspending agent.

In yet another aspect, the present invention is a water-in-oil suspension polymerization process wherein water-soluble monomers are polymerized, said process comprising:
(1) providing an aqueous phase comprising water and at least one water-soluble monomer;
(2) providing an oil phase comprising an inert hydrophobic liquid and the aforementioned suspending agent; and
(3) contacting the aqueous phase and the oil phase under conditions such that a water-in-oil suspension of polymer comprising polymerized water-soluble monomer is provided.

Another aspect of the present invention is the aqueous-fluid absorbent polymer beads prepared from the water-in-oil suspension polymerization of water soluble monomers which comprises:
(1) providing an aqueous phase comprising water and at least one water-soluble monomer;
(2) providing an oil phase comprising an inert hydrophobic liquid and a suspending agent comprising:
   (a) a particulate material comprising a hydrophobic character, and
   (b) a polymer having a substantially hydrophobic character said polymer having hydrophobic moieties pendant from the backbone thereof; and
(3) contacting the aqueous phase and the oil phase under conditions such that a water-in-oil suspension of polymer beads comprising polymerized water-soluble monomer is provided.

In yet another aspect, the present invention is a method for improving the hydration rate of polymer beads prepared from a suspension polymerization by using a wetting agent which does not reduce the surface tension of a supernate (provided by a standard test method described herein below) below 56 dynes/cm. The wetting agent can be used in the water-in-oil suspension polymerization stated above or in other suspension polymerization processes where improved hydration rate in the resultant water-swellable polymer or bead is desired.

In one aspect, the method for improving the hydration rate of aqueous-fluid absorbing beads from a suspension polymerization of water soluble monomers comprises:
(1) suspension polymerizing the water-soluble monomers to produce aqueous fluid-absorbing beads;
(2) removing the water from the suspension;
(3) adding a wetting agent which does not reduce the surface tension of a supernate (provided by a standard test method) below 56 dynes/cm, in an amount sufficient to improve the hydration rate of the beads; and
(4) drying the beads.

Ideally, the hydration rate of the polymer beads is improved without destroying the advantageous properties which the polymer bead provides in aqueous-fluid absorbing polymer materials.

Another aspect of the present invention is the improved hydration rate of the water-swellable polymer beads achieved by reducing the molecular weight of the polymer portion of the suspending agent used.

In another aspect, the method for improving the hydration rate of aqueous-fluid absorbing beads from a suspension polymerization of water soluble monomers comprises:
(1) providing an aqueous phase comprising water and at least one water-soluble monomer;
(2) providing an oil phase comprising an inert hydrophobic liquid and a suspending agent comprising:
   (a) hydrophobic fumed silicon dioxide and
   (b) a copolymer of acrylic acid and lauryl methacrylate having a molecular weight of from 100,000 to 300,000; and
(3) contacting the aqueous phase and the oil phase under conditions such that a water-in-oil suspension of polymer beads comprising the polymerized water-soluble monomer is provided.

A final aspect of the present invention is the method of using the wetting agent in the suspension polymerization of water-soluble monomers which comprises:
(1) providing an aqueous phase comprising water and at least one water-soluble monomer;
(2) providing an oil phase comprising an inert hydrophobic liquid and a suspending agent comprising:
   (a) hydrophobic fumed silicon dioxide and
   (b) a copolymer of acrylic acid and lauryl methacrylate;
(3) contacting the aqueous phase and the oil phase under conditions such that a water-in-oil suspension of polymer comprising polymerized water-soluble monomer is provided;
(4) removing the water from the suspension;
(5) adding a wetting agent which does not reduce the surface tension of a supernate (provided by a standard test method) below 56 dynes/cm, in an amount sufficient to improve the hydration rate of the bead; and
(6) drying the polymer beads.

In addition to their utility as additives in drilling muds, fracturing fluids and fluid mobility control agents in enhanced oil recovery methods, the water-soluble polymers or water-swellable polymer beads prepared in accordance with the practice of the present invention are also useful as flocculating agents for sewages, industrial wastes, mining streams such as coal slurries and mining effluents, as thickeners for coating formulations, as additives for the manufacture of paper, and in a variety of other uses common for such polymers prepared by other conventional polymerization methods.

Polymers comprising a crosslinked character and which are swellable in aqueous fluids are useful as aqueous fluid absorbent compositions. In preferred embodiments, such aqueous fluid absorbent polymer compositions can absorb several times their weight of an aqueous liquid, preferably more than 15 times their weight in water. Such compositions can be employed in a wide variety of applications as are disclosed in U.S. Patents 4,424,247; 4,511,477; 4,293,609 and 4,486,374.

Surprisingly, the use of the aforementioned suspending agent, when employed in suspension polymerization processes, can provide a polymerizatlon product which exhibits a controlled particle size distribution, a polymer bead. In addition, the polymerization products can be effectively dried using relatively energy efficient techniques such as steam distillation or azeotropic distillation. Of particular interest is the use of the suspending agent of this invention in providing water-swellable polymer bead products of controlled particle size. Further, the hydration rate of the beads can then be improved by the addition of a wetting agent which does not reduce the surface tension of a supernate (provided by a standard test method described herein below) below 56 dynes/cm.

Further, the process of making the beads can be more efficient when the wetting agent is added after polymerization but prior to the actual drying of the beads, resulting in the need for drying the beads only once. If the wetting agent is added after the beads have been dried, a second drying is required to drive off the diluent for the wetting agent.

The present invention is practiced in the preparation of water-in-oil suspensions containing a polymer prepared from water-soluble monomers. Such suspensions are those wherein the dispersed phase is an aqueous phase having contained therein said polymer, and the continuous oil phase is a water-immiscible inert organic liquid. Advantageously, the suspension comprises preferably from 90 to 30, preferably from 60 to 40, weight percent dispersed (i.e., aqueous) phase based on the total weight of the suspension. The amount of polymer contained in the suspension can vary providing that the resulting suspension is stable, and is advantageously from 10 to 50, more preferably from 20 to 40, weight percent polymer based on the total weight of the suspension. In the suspensions, the weight ratio of water to polymer in the aqueous phase can vary and is desirably from 0.01:99 to 9:1, more preferably from 4:1 to 0.67:1, and most preferably from 2.33:1 to 1.5:1.

For the purposes of this invention, the water-soluble polymer contained in the aqueous phase of the suspension is one that forms a thermodynamically stable mixture when combined with water. These mixtures form spontaneously and include true solutions in which the individual polymer molecules are dispersed as well as micellar or colloidal solutions wherein the polymer molecules are aggregated to some extent, but wherein such aggregates are no larger than colloidal size. Accordingly, such water-soluble polymers are generally homopolymers and copolymers of water-soluble ethylenically unsaturated monomers.

Suitable water-soluble monomers include those that are at least water-miscible and that are preferably sufficiently water-soluble to form at least a 5 weight percent solution when dissolved in water and readily undergo addition polymerization to form polymers that are water-soluble. Exemplary water-soluble monomers include ethylenically unsaturated amides such as acrylamide, methacrylamide and fumaramide; their N-substituted derivatives such as 2-acrylamide-2-methylpropane sulfonic acid (AMPS), N-(dimethylaminomethyl)acrylamide as well as N-(trimethylammoniummethyl)acrylamide chloride and N-(trimethylammoniumpropyl)methacrylamide chloride; ethylenically unsaturated carboxylic acids such as acrylic acid, methacrylic acid, itaconic acid and fumaric acid; ethylenically unsaturated quaternary ammonium compounds such as vinylbenzyl trimethyl ammonium chloride, sulfoalkyl esters of unsaturated carboxylic acids such as 2-sulfoethyl methacrylate; aminoalkyl esters of unsaturated carboxylic acids such as 2-aminoethyl methacrylate and 2-(N,N-dimethylamino)-ethyl methacrylate as well as the quaternized derivatives thereof such as acryloylethyl trimethyl ammonium chloride; vinyl amines such as vinyl pyridine and vinyl morpholine, diallyl amines and diallyl ammonium compounds such as diallyl dimethyl ammonium chloride; vinyl heterocyclic amides such as vinyl pyrrolidone; vinylaryl sulfonates such as vinylbenzyl sulfonate as well as the salts of the foregoing monomers. Of the foregoing water-soluble monomers, acrylamide and combinations of acrylamide and acrylic acid are preferred. Homopolymers of acrylic acid can also be prepared. Homopolymers prepared from acrylamide and copolymers prepared from combinations thereof with other water-soluble monomers are more preferred. Also preferred are polymers wherein the water-soluble monomers range from 5 to 99 mole percent of acrylamide and/or partially hydrolyzed acrylamide and from 1 to 5 mole percent of other water-soluble monomers. Of particular interest are lightly crosslinked polymers such as polyacrylic acid polymers, sodium polyacrylate polymers, and copolymers of polymerized acrylic acid and sodium acrylate; which polymers are copolymerized with polyvinyl monomers such as trimethylolpropane triacrylate.

The water-immiscible oil phase of the suspension generally comprises at least one inert hydrophobic liquid. Usually such liquid is an organic compound which is normally liquid at the conditions at which the suspension is used in the polymerization process. Operable liquids include hydrocarbons or substituted hydrocarbons. Preferred organic liquids are the halogenated hydrocarbons such as, for example, perchloroethylene and methylene chloride as well as liquid hydrocarbon having from 4 to 15 carbons per molecule, including aromatic and aliphatic hydrocarbons and mixtures thereof, e.g., benzene, xylene, toluene, mineral oils and liquid paraffins such as kerosene and naphtha. Of the foregoing organic liquids, the hydrocarbons are the more preferred, with aliphatic hydrocarbons being most preferred.

The suspension polymerization processes are performed by following the general procedures described in the art as exemplified in U.S. Patents 4,340,706; 4,367,323 and 4,446,261. In the process of this invention, an aqueous phase containing water-soluble monomer(s) typically is dispersed in the inert hydrophobic liquid which contains the suspending agent of this invention. Typically, it is desirable to agitate the resulting composition. Factors, such as the rate of agitation of the composition, control properties such as the droplet or particle size of the suspended aqueous phase.

The suspending agent of this invention comprises two necessary components; the particulate material having a hydrophobic character and the polymer having a substantially hydrophobic character.

The particulate material comprising a hydrophobic character can be described as an amorphous, highly oil dispersible, approximately micron size, substantially water-insoluble particulate material. Typically, the size of the particulate material ranges from less than 1 micron to several microns in diameter. The particulate material is most preferably hydrophobic, for example, silicon dioxide, the particulate material provided by the reaction of silica with polydimethyldichlorosilane. Other useful particulate materials include hydrophobic clays such as the cationic surfactant treated bentonite clays. An example of a hydrophobic clay is sold commercially as Bentone® 34 by N. L. Industries.

The polymer having a substantially hydrophobic character has hydrophobic moieties pendant from the backbone thereof. The hydrophobic groups of the polymer having a substantially hydrophobic character are preferably pendant organic groups having hydro-phobicities comparable to one of the following: aliphatic hydrocarbon groups having at least four carbons such as C₄ to C₂₀ alkyls and cycloalkyls; aromatic hydrocarbon groups such as alkylaryls wherein alkyl has one or more carbons, preferably 4 to 8 carbons; haloalkyls of 4 or more carbons, preferably perfluoroalkyls; polyalkyleneoxy groups wherein alkylene is propylene or higher alkylene and there is at least 1 alkyleneoxy unit per hydrophobic moiety.

Suitable hydrophobic monomers include those which are (1) water-insoluble, i.e., less than 0.4, preferably 0.2, weight part of the hydrophobic monomer will dissolve in 100 weight parts water and (2) ethylenically unsaturated compounds having hydrophobic groups as defined hereinbefore. Exemplary hydrophobic monomers include the higher alkyl esters of α,β-ethylenically unsaturated carboxylic acids such as dodecyl acrylate, dodecyl methacrylate, tridecyl acrylate, tridecyl methacrylate, tetradecyl acrylate, tetradecyl methacrylate, octadecyl acrylate, octadecyl methacrylate, ethyl half ester of maleic anhydride, diethyl maleate, and other alkyl esters derived from the reactions of alkanols having from 4 to 20, preferably from 8 to 20, carbon atoms with ethylenically unsaturated carboxylic acids such as acrylic acid, methacrylic acid, fumaric acid, itaconic acid and aconitic acid, and maleic anhydride; alkylaryl esters of ethylenically unsaturated carboxylic acids such as nonyl-α-phenyl acrylate, nonyl-α-phenyl methacrylate, dodecyl-α-phenyl acrylate and dodecyl-α-phenyl methacrylate; N-alkyl, ethylenically unsaturated amides such as N-octadecyl acrylamide, N-octadecyl methacrylamide, N,N-dioctyl acrylamide and similar derivatives thereof; α-olefins of at least 8 carbon atoms, such as octene-1, decene-1, dodecene-1 and hexadecene-1; vinyl alkylates wherein alkyl has at least 8 carbons such as vinyl laurate and vinyl stearate; vinyl alkyl ethers such as dodecyl vinyl ether and hexadecyl vinyl ether; N-vinyl amides such as N-vinyl lauramide and N-vinyl stearamide; and arylalkylstyrenes such as t-butyl styrene. Of the foregoing hydrophobic monomers, the alkyl esters of acrylic acid, methacrylic acid, N-alkyl acrylamides and N-alkyl methacrylamides wherein alkyl has from 8 to 20 carbon atoms, the alkyl styrenes wherein alkyl has from 4 to 8 carbons such as t-butyl, are preferred. The alkylmethacrylates and alkylacrylates wherein alkyl has from 10 to 20 carbon atoms are more preferred. Dodecyl methacrylate and N-dodecyl methacrylamide are the most preferred where hydrolysis is not a problem.

The polymer having a substantially hydrophobic character is advantageously prepared by polymerizing the aforementioned hydrophobic monomers and optionally other monomers such as hydrophilic monomers in an oil phase using conventional initiators or catalysts. Suitable hydrophilic monomers are those described above as water-soluble monomers. The polymers typically have molecular weights of 100,000 to 5 million. All molecular weights herein are determined by size exclusion chromatography.

The molecular weights of the polymer having a substantially hydrophobic character can affect the hydration rate of the resultant water-swellable polymer. The hydration rate of the resultant water-swellable polymer can be improved using a polymer having a lower molecular weight. When a lower molecular weight polymer is used in the suspending agent the resultant smaller water-swellable polymer beads generally have an improved hydration rate. For example, a water-swellable polymer bead having a mesh size of from 100 mesh (150 µm) to 325 mesh (45 µm) can be produced using a polymer of the suspending agent having a molecular weight of from 100,000 to 300,000. Aqueous fluid absorbing polymer-beads can be produced having mesh sizes of from 30 mesh (550 µm) to 200 mesh (75 µm). Such beads can be produced from the molecular weight of the suspending agent polymer which can be from 500,000 to 5,000,000.

The molecular weight of the suspending agent polymer can be controlled through conventional methods known in the art. For example, agents such as chain transfer agents, mercaptans, alcohols, and chlorinated hydrocarbons can be added or parameters can be controlled during the polymerization of the suspending agent polymer to control the molecular weight. The use of such agents and parameters to vary molecular weight is generally known to one skilled in the art.

The amount of hydrophilic monomer polymerized with the hydrophobic monomers depends upon factors such as the types of water-soluble polymers which are provided and typically ranges from greater than 0 to 15 percent. For example, the amount of hydrophilic monomer which is polymerized in the polymer having the substantially hydrophobic character can vary depending upon factors such as those attendant when water-soluble copolymers are prepared from two or more varying monomers.

The amount of components comprising the suspending agent can vary. The amount of each component depends upon factors such as the desired particle size distribution of the polymer product. The amount of each can conveniently range from 5 to 95 weight percent, relative to one another.

The amount of suspending agent employed depends upon factors such as that amount necessary to provide a suspended aqueous phase in the oil phase while employing an amount which is economically low. The amount typically ranges from 0.05 to 10 weight percent relative to the amount of water-soluble monomer which is being polymerized.

The suspending agent is incorporated into the oil phase using a variety of techniques. For example, it is desirable to contact the oil phase with the suspending agent under conditions which produce good mixing such as agitation.

Polymerization of the water-in-oil suspension of the water-soluble monomer(s) is advantageously effected under conventional conditions such as described in U.S. Patents 4,340,706; 4,367,323 and 4,446,261. Normally, such polymerization is practiced in the presence of a polymerization initiator capable of generating free-radicals. Preferably, this free-radical initiator is employed in amounts of from 0.01 to 0.1 weight percent of initiator based on the monomers. Exemplary polymerization initiators include the inorganic persulfates such as potassium persulfate, ammonium persulfate and sodium persulfate; azo catalysts such as azobisisobutyronitrile and dimethylazoisobutyrate; organic peroxygen compounds such as benzyl peroxide, t-butylperoxide, diisopropylbenzene hydroperoxide, t-butyl hydroperoxide; and compounds such as sodium borohydride. Of these initiators, the organic types such as t-butyl hydroperoxide are preferred. In addition to the aforementioned ingredients, the suspension polymerization recipe optionally includes other ingredients, such as, for example, chain transfer agents, chelating agents, buffers and salts.

If desired, a crosslinking agent can be incorporated into the polymerization process. The crosslinking agent can be incorporated into the aqueous phase, the oil phase, or in the presence of both the aqueous phase and the oil phase. Preferably, the crosslinking agent is incorporated into the aqueous phase. The crosslinking agent can be employed in an amount sufficient to provide to the polymerization product an effective increase in molecular weight, or to impart to the polymerization product a water-swellable character as is desirable in aqueous fluid absorbent compositions, or to provide a hydrogel product. For example, oil-soluble polyvinyl crosslinking monomers can be incorporated into the oil phase. Examples of polyvinyl crosslinking monomers include divinylbenzene, diethylene glycol diacrylate, propylene glycol dimethacrylate, allyl acrylate, diallyl fumarate and trimethylolpropanetriacrylate. Examples of other crosslinking monomers include polyhaloalkanols; sulfonium zwitterions; haloepoxyalkanes; polyglycidyl ethers; aminoepihalohydrin adducts; multivalent metal ions such as aluminum or calcium and glycidyl acrylates. The amount of crosslinking agent depends upon a variety of factors, but typically ranges from 0.01 to 1 percent based on the weight of the polymer.

After the polymerization reaction is complete, the suspension can be employed in a variety of ways. For example, the suspension can be (a) employed as is, (b) treated using centrifugal techniques in order to separate the polymer from the oil, (c) precipitated using agents such as methanol or acetone, (d) filtered, or (e) spray dried.

The wetting agent can be added after the beads have been dried. Most economically, however, the wetting agent can be added after polymerization but prior to drying to allow for a single drying step of the polymer bead.

A wetting agent is defined as an agent which improves the hydration rate of the bead and does not reduce the surface-tension of a supernate (provided by a standard test method) below 56 dynes/cm. The "standard test method" is described below.

### Standard Test Method for Determining Surface Tension of Supernate

1. Treat dry polymer beads with 0.4 weight percent (based on dry weight of polymer beads) of polyol;
2. Dissolve 1 g of the treated polymer beads in 150 g of 0.9 percent saline solution;
3. Filter off the supernate; and
4. Determine the surface tension of the supernate by using a duNouy surface tension apparatus.

Ideally, the hydration rate of the bead is improved without significantly reducing the absorbency properties of the aqueous fluid absorbent material in which the bead is incorporated. Therefore, examples of such a wetting agent are non-surfactant or non-detergent type wetting agents such as polyols. Voranol® (from The Dow Chemical Company) brand wetting agent is a preferred example of such a polyol.

Typically, the wetting agent is introduced to the polymer bead as an aqueous solution in an amount sufficient to increase the hydration rate of the polymer bead. Preferably, an amount of from 0.2 to 2.0 weight percent of wetting agent based on the weight of polymer beads will be a sufficient amount. Most preferably, the wetting agent is from 0.3 to 0.4 weight percent of wetting agent based on the weight of polymer beads.

If the beads are dried and then surface treated with the wetting agent aqueous solution, the process entails several energy and time consuming steps. The beads require drying off the oil phase and water phase, then spraying the wetting agent solution on the beads and finally redrying the beads.

However, the intermediate drying step can be substantially reduced if, after the polymerization is complete, the water is removed from the suspension, leaving the oil phase remaining with the polymer beads. A wetting agent in an aqueous solution is then added. Preferably the solution is added to the polymer beads slowly; most preferably the addition occurs over a period of from 1 to 30 minutes. The water can then be vacuum stripped and the oil can be removed by filtration or centrifugation. A final drying yields polymer beads having an improved hydration rate over beads which have not been treated with the wetting agent.

The molecular weight of the water-soluble polymer or water-swellable polymer is not particularly critical and may vary over a wide range. However, as stated above, a smaller water-swellable polymer bead can improve the hydration rate of the polymer. Typically, molecular weights range from 100,000 to 50 million depending on the desired use of the polymer. Preferred polymers have weight average molecular weight in the range of from 2 to 25 million. It is understood that the molecular weights of the crosslinked polymer beads can be essentially infinite.

The following examples are given to further illustrate the invention but not to limit its scope. All parts and percentages are given by weight unless otherwise indicated.

### Example 1

### A. Preparation of Laurylmethacrylate/Acrylic Acid Copolymer

To 795.4 g of laurylmethacrylate was added 4.64 g of glacial acrylic acid and 800 g of liquid hydrocarbon sold commercially as Isopar® M by Exxon. Then 0.8 g of 2,2′-azobis(2,4-dimethylvaleronitrile) which is sold commercially as Vazo® 52 by E. I. duPont de Nemours Corporation was added. The solution was agitated, purged with nitrogen for 1 hour and then heated to 50°C. After 12 hours of heating, the temperature of the thickened solution was increased to 60°C and held there for 2 hours. It was then cooled and mixed with another 800 g of the aforementioned liquid hydrocarbon to give a 33 percent polymer solution.

### B. Suspension Polymerization of Crosslinked Sodium Polyacrylate

131 g of glacial acrylic acid was mixed with 167 g of water. Then a 50 percent aqueous solution of sodium hydroxide was added dropwise, while keeping the temperature less than 50°C. Addition was continued until the pH of the solution was 6.0. To this mixture was added 0.6 g of pentasodium salt of diethylenetriamine pentaacetic acid sold commercially as Versenex® 80 by The Dow Chemical Company, and the total weight of the aqueous phase was adjusted to 490 g with additional water.

The oil phase was prepared by adding 4.28 g of hydrophobic fumed silica sold as Aerosil® R-972 by Degussa and 12.82 g of 33.3 percent 99 mole percent laurylmethacrylate/1 mole percent acrylic acid copolymer in the liquid hydrocarbon to 432.9 g of the liquid hydrocarbon.

The aforementioned Aerosil® R-972 component was dispersed by mixing the mixture with a Waring blender at medium agitation. The oil phase was then transferred to a 1-liter reactor. The crosslinking agent, 0.4275 g of trimethylolpropane triacrylate, was added to the oil phase. Then 0.0684 g of sodium persulfate and 0.0977 g of a 70 percent aqueous solution of t-butylhydroperoxide were added to the aqueous phase. The agitator on the 1-liter reactor was set at 500 rpm and the aqueous phase was added quickly to the oil phase. The reactor was purged with N₂ for 1 hour and the polymerization was initiated by adding a nitrogen stream containing 1000 ppm SO₂ at a rate of 50 cm³/min through a dip tube. The reactor jacket was heated to 40°C over a 10-minute period. This controls the actual polymerization temperature to 50°C. After an hour, the jacket was heated to 60°C and maintained at that temperature for an additional hour. The slurry was then cooled, centrifuged to remove excess liquid hydrocarbon and the product was air dried.

### Example 2

A water-soluble copolymer of acrylamide and acrylic acid was provided as follows:
An aqueous phase was provided by mixing 241.8 g of aqueous acrylamide solution (48 percent acrylamide) and 16.85 g of glacial acrylic acid with 69.8 g of water. To this mixture was added 0.28. g of the aforementioned Versenex® 80 and enough of a 50 percent sodium hydroxide solution to bring the pH of the mixture to 6.5. Additional water was added to give a total weight of the mixture of 350 g.

An oil phase was provided by adding 3.5 g of the aforementioned Aerosil® R-972 and 10.5 g of a 33 percent solution of a copolymer of laurylmethacrylate and acrylic acid. The mole ratio of laurylmethacrylate to acrylic acid was 95:5. The copolymer was blended with 336 g of the aforementioned Isopar M hydrocarbon.

To the aforementioned aqueous phase was added 0.7 g of isopropyl alcohol and 0.05 g of a 70 percent aqueous solution of t-butylhydroperoxide. The oil phase was transferred to a 1-liter reactor and stirred at 300 rpm. The aqueous phase was added to the oil phase and then the suspension was purged for 1 hour with nitrogen. The polymerization was initiated by adding SO₂ at a flow rate of 0.05 cm³/minutes. The reaction was held at 50°C for 1 hour and then heated to 60°C for an additional hour.

The polymer was isolated by filtering off the hydrocarbon phase and drying (i.e., the Isopar® M) the beads in a forced air dryer at 90°C. The product was a spherical free-flowing solid. The viscosity of 0.3 percent solution of the polymer in 3 percent sodium chloride at a pH of 7 was 16 cps (0.016 Pa·s) as determined using an Ostwald viscometer.

### Example 3

A copolymer comprised of 70 mole percent acrylamide and 30 mole percent acrylic acid was provided as follows:
An aqueous phase weighing 318 g was provided by mixing 165 g of a 49.4 percent aqueous acrylamide solution with 35 g of glacial acrylic acid and 0.254 g of the aforementioned Versenex® 80. To this solution was added enough of a 50 percent sodium hydroxide solution to adjust the pH to 6.5, 0.0727 g of tertiary butyl hydroperoxide and water to provide the aforementioned 318 g total weight.

An oil phase weighing 381.86 g was provided by mixing 3.18 g of the aforementioned Aerosil® R-972 composition with 3.18 g of a polylaurylmethacrylate polymer with 375.5 g of the Isopar® M hydrocarbon.

The aqueous phase was added to the oil phase in a 1-liter reactor while agitating at 450 rpm. The mixture was purged for 1 hour with nitrogen and the polymerization was initiated by adding SO₂ at a flow rate of 0.05 cm³/minute. Shortly after initiation the suspension failed, coalescing into large mass of polymer.

The aforementioned experiment was repeated, except that the polylaurylmethacrylate polymer was replaced with 3.18 g of a copolymer of 99 mole percent laurylmethacrylate and 1 mole percent acrylic acid. The suspension was agitated with SO₂ and heated to 50°C for 1 hour. The suspension partially failed giving large chunks of agglomerated beads.

The above experiment was further repeated replacing the 1 mole percent acrylic acid/99 mole percent laurylmethacrylate copolymer, with 3.18 g of a 2.5 mole percent acrylic acid/97.5 mole percent laurylmethacrylate copolymer. The polymerization proceeded smoothly. After polymerizing at 50°C for one hour, the product was isolated by filtering off the hydrocarbon (i.e., the Isopar® M) and drying the beads. Microscopic examination shows that the polymer consisted of small agglomerates of polymer beads.

The above experiment was further repeated by replacing the 2.5 mole percent acrylic acid/97.5 mole percent laurylmethacrylate copolymer with 3.18 g of a 5 mole percent acrylic acid/95 mole percent laurylmethacrylate copolymer. The polymerization was run as described hereinbefore. Microscopic examination showed that the product consisted of spherical polymer beads free from any signs of agglomeration.

### Example 4

A crosslinked polymer was provided as follows:
An aqueous phase was provided by mixing 116.4 g of glacial acrylic acid, 0.53 g of the aforementioned Versenex® 80, enough of a 50 percent aqueous sodium hydroxide solution to adjust the pH to 6 and enough water to provide a 400 g total aqueous phase.

An oil phase weighing 400 g was provided by mixing 1.14 g of the aforementioned Aerosil® R-972, a copolymer of 99 mole percent laurylmethacrylate and 1 mole percent acrylic acid, 0.456 g of trimethylolpropanetriacrylate and 397.7 g of Isopar® M hydrocarbon.

To the aqueous phase was added 0.0868 g of t-butyl hydroperoxide and 0.0608 g of sodium persulfate which was in turn added to a 1-liter reactor containing the oil phase. The agitator on the reactor was set at 450 rpm. The mixture was purged with nitrogen for 1 hour and polymerization was then initiated at 25°C by the addition of SO₂ at the rate of 0.0833 cm³/minute. The reaction was heated to 50°C and was held at this temperature for 1 hour. The temperature was then increased to 60°C and held there for an additional hour.

The reaction mixture was cooled to room temperature and the Isopar® M hydrocarbon was removed by filtration. The polymer beads were dried in a forced-air dryer at 90°C.

The water-retention capacity of the polymer so provided was determined to be 75 g of a 0.9 percent aqueous sodium chloride solution per gram of polymer. The amount of extractable polymer was 2.5 percent. The extractable polymer was determined by contacting a polymer sample in a 0.9 percent aqueous sodium chloride solution and shaking for 16 hours.

The extractable polymer test was rerun except that a mixture of 0.9 percent aqueous sodium chloride and polymer beads were sheared for 10 seconds in a Waring blender at high speed. The sample was filtered and titrated as usual. The extractables of this sample increased to 5.6 percent.

The aforementioned polymerization process was repeated except that the SO₂ flow rate initiation was increased to 0.108 cm³/minute. The polymer was isolated as described hereinbefore. The resulting polymer exhibited a higher capacity while maintaining low extractables as indicated by a retention capacity of the 0.9 percent aqueous sodium chloride solution of 90 g per gram of polymer and the polymer extractables value of 5.36 percent and a further extractable of a similarly shear product of 11.8 percent.

The aforementioned experiments indicate that the polymerization conditions can affect polymer water-retention capacity. For example, increasing the SO₂ flow rate increased the capacity of the polymer. The above experiment also indicates that due to the fact that a higher percentage of polymer extractables were provided in the shear bead examples that it was believed that the copolymer beads were more highly crosslinked near the surface of the particles.

### Example 5

A crosslinked polymer was provided as follows:
An aqueous phase weighing 308 g was provided by mixing 87 g of glacial acrylic acid, 0.228 g of the aforementioned Versenex® 80 and enough of a 50 percent sodium hydroxide solution to adjust the pH to 6 and water to give a total weight of 308 g.

An oil phase was provided by mixing 4.27 g of Aerosil® R-972, 1.42 g of a 99 mole percent laurylmethacrylate/1 mole percent acrylic acid copolymer, 0.456 g of diethyleneglycoldiacrylate and 336.76 g of Isopar® M hydrocarbon.

The aqueous phase was mixed with 0.0468 g of a 70 percent solution of t-butyl hydroperoxide and 0.0468 g of sodium persulfate with the aqueous phase. This aqueous phase was added to the oil phase in a 1-liter reactor. Agitation during addition was 450 rpm. The reactor was purged with nitrogen for 1 hour and then the polymerization was started by adding SO₂ at the rate of 0.0833 cm³/minute. The polymerization was held at 50°C for 1 hour and then the mixture was heated to 60°C for an additional hour. The beads were separated by filtering off the excess Isopar® M and dried in a forced-air oven at 90°C. The water-retention capacity of the beads so provided was 59 g of the 0.9 percent sodium chloride solution per gram of polymer.

### Example 6

A crosslinked polymer bead, 250 to 300 microns in size, having an improved hydration rate after having been treated with a wetting agent, was prepared as follows.

An aqueous phase was provided by mixing 43 lbs. (19.5 kg) of glacial acrylic acid, 88 g of the aforementioned Versenex® 80, 44 lbs. (19.9 kg) of a 50 percent sodium hydroxide solution, 53 lbs. (24 kg) of water and 76 g of trimethylolpropanetriacrylate.

An oil phase was provided by mixing 186 g of Aerosil® R-972, 233g of a 98 mole percent laurylmethacrylate/2 mole percent acrylic acid copolymer having a molecular weight of 590,000, and 139 lbs. (63 kg) of Isopar® M hydrocarbon.

The aqueous phase was mixed with 14.5 g of a 70 percent solution of t-butyl hydroperoxide and 15 g of sodium persulfate with the aqueous phase. This aqueous phase was added to the oil phase in a 50 gallon reactor at 20°C. Agitation during addition was 90 rpm. The reactor was purged with nitrogen for 1 hour and then the polymerization was started by adding SO₂ at the rate of 0.1-1 cm³/minute. After polymerizing for two hours, agitation was increased to 120 rpm and the temperature was increased to 90°C with a vacuum on the reactor to strip off the water. Later a solution of 95 g of Voranol® wetting agent in 4.5 kg (10 lbs). of water was slowly added to the reactor at a rate of 0.9 kg/min (2 lb./min.). The beads were separated by filtering off the excess Isopar® M and dried in a forced-air oven at 90°C. The water-swellable polymer bead made by the above process had a particle size distribution centered around 180 µm to 300 µm. (50 to 80 mesh).

The hydration rate of the polymer beads treated with wetting agent and the untreated beads were tested by adding 50 g of a 0.9 percent sodium chloride solution to a beaker equipped with a stir bar adjusted to a brisk stir rate. Two grams of the beads were added to the solution and the rate in seconds was the time for the vortex of the solution to disappear.

The untreated beads were made in the same manner as above with the exception of the wetting agent. The hydration rate of the untreated beads was 134 seconds and the hydration rate of the treated beads was 83 seconds. The data indicates the improved hydration rate of the beads having been treated with the wetting agent.

### Example 7

A crosslinked polymer bead having a particle size distribution of from 75-90 µm and having an improved hydration rate after having been treated with a wetting agent was prepared as in example 6 except the molecular weight of the 98 mole percent laurylmethacrylate/2 mole percent acrylic acid was as low as 200,000.

The bead of Example 7 had a particle size distribution centered at 75-90 µm (170-200 mesh). The hydration rate measured as in Example 6 for the untreated beads was 94 seconds and the treated beads had a hydration rate of 23 seconds.

Therefore, by decreasing the molecular weight of the polymer portion of the suspending agent, the untreated beads produced are smaller and have a faster hydration rate than the untreated larger beads made with a suspending agent having a polymer portion with a larger molecular weight. The treated smaller beads also hydrate faster than the treated larger beads as shown in Example 6.

## Claims

1. A process for suspension polymerization of water-soluble monomers, comprising:
(1) providing an aqueous phase comprising water and at least one water-soluble monomer;
(2) providing an inert hydrophobic liquid oil phase of halogenated, aromatic or aliphatic hydrocarbons and a suspending agent
(3) contacting the aqueous phase and the oil phase under conditions such that a water-in-oil suspension of polymer is provided, said process excluding surfactants that inhibit the water absorbency of said polymer
**characterized in that**
said suspending agent comprises a combination of
(a) a particulate material of hydrophobic character and
(b) a polymer having a substantially hydrophobic character, said polymer having pendant hydrophobic moieties, wherein said suspending agent is substantially soluble in said oil phase.

2. A process as claimed in claim 1
**characterized in that**
the suspending agent comprises (a) a hydrophobic fumed silicone dioxide and (b) a copolymer of acrylic acid and lauryl methacrylate.

3. A process as claimed in claim 1 or claim 2
**characterized in that**
the polymer having substantially hydrophobic character is selected from the group consisting of: higher alkyl esters of α,β-ethylenically unsaturated carboxylic acids, and other alkyl esters derived from the reactions of alkanols having from 4 to 20 carbon atoms with ethylenically unsaturated carboxylic acids; alkylaryl esters of ethylenically unsaturated carboxylic acids, unsaturated amides; α-olefins of at least 8 carbon atoms; vinyl alkylates wherein alkyl has at least 8 carbon atoms; vinyl alkylates wherein alkyl has at least 8 carbons; N-vinyl amides and arylalkylstyrenes.

4. The process as claimed in any one of the preceding claims
**characterized in that**
it further comprises:
(4) removing the water from the suspension,
(5) adding the wetting agent which does not reduce the surface-tension of a supernate (provided by a standard test method) below 56 dynes/cm, in an amount sufficient to improve the hydration rate of the beads, and
(6) drying the beads; and
wherein the particulate material which comprises a hydrophobic character is hydrophobic fumed silicon dioxide and the polymer having a substantially hydrophobic character is a copolymer of acrylic acid and lauryl methacrylate.

5. A process as claimed in any one of the preceding claims
**characterized in that**
said beads are crosslinked by polymerizing the water-soluble monomers in the presence of a crosslinking agent.

6. A process as claimed in any one of the preceding claims
**characterized in that**
the amount of suspending agent ranges from 0.05 to 10 weight percent relative to the amount of water-soluble monomer which is polymerized and wherein the wetting agent is added over a period of from 1 to 30 minutes.

7. A method for improving the hydration rate of aqueous-fluid absorbing beads form a water-in-oil suspension polymerization of water-soluble monomers which comprises:
(1) providing an aqueous phase comprising water and at least one water-soluble monomer;
(2) providing an inert hydrophobic liquid oil phase of halogenated, aromatic or aliphatic hydrocarbons and a suspending agent;
(3) contacting the aqueous base and the oil phase under conditions such that a water-in-oil suspension of polymer comprising polymerized water-soluble monomer is provided said process excluding surfactants that inhibit the water absorbency of said polymer,
(4) removing the water from the suspension to leave an oil phase containing the beads;
**characterized in that**
said suspending agent comprises a combination of
(a) hydrophobic fumed silicon dioxide and
(b) a copolymer of acrylic acid and lauryl methacrylate.
an said process further comprises:
(5) adding to the oil phase a wetting agent which does not reduce the surface tension of a supernate (provided by a standard test method) below 56 dynes/cm, in an amount sufficient to improve the hydration rate of the bead; and
(6) drying the polymer beads.

8. A suspending agent useful in suspension polymerization processes
**characterized in that**
said suspending agent comprising (1) a combination of a particulate comprising a hydrophobic character, and (2) a polymer having substantially hydrophobic character said polymer having hydrophobic moieties pendant from the backbone thereof.

9. A suspending agent as claimed in claims 8,
**characterized in that**
said particulate comprising a hydrophobic character is hydrophobic fumed silicon dioxide and said polymer having a substantially hydrophobic character is a copolymer of acrylic acid and laurylmethacrylate.

## Patentansprüche

1. Verfahren zur Suspensionspolymerisation von wasserlöslichen Monomeren durch:
(1) Vorlegen einer wäßrigen Phase, die Wasser und mindestens ein wasserlösliches Monomer enthält,
(2) Vorlegen einer inerten hydrophoben flüssigen Ölphase von halogenierten, aromatischen oder aliphatischen Kohlenwasserstoffen und einem Suspendiermittel,
(3) Inberührungbringen der wäßrigen Phase mit der Ölphase unter Bedingungen, unter denen eine Wasser-in-Öl-Suspension von Polymer geschaffen wird, wobei beim Verfahren oberflächenaktive Mittel, die die Wasserabsorption des Polymeren hemmen, ausgeschlossen sind,
**dadurch gekennzeichnet,**
daß das Suspendiermittel eine Kombination enthält von
(a) einem teilchenförmigen Material mit hydrophobem Charakter und
(b) einem Polymer mit im wesentlichen hydrophobem Charakter, wobei das Polymer anhängende hydrohobe Gruppen aufweist, wobei das Suspendiermittel im wesentlichen in der Ölphase löslich ist.

2. Verfahren nach Anspruch 1,
**dadurch gekennzeichnet,**
daß das Suspendiermittel (a) ein hydrophobes pyrogenes Siliziumdioxid und (b) ein Copolymer von Acrylsäure und Laurylmethacrylat enthält.

3. Verfahrn nach Anspruch 1 oder 2,
**dadurch gekennzeichnet,**
daß das Polymer mit im wesentlichen hydrophobem Charakter ausgewählt ist aus der Gruppe bestehend aus höheren Alkylestern von α,β-ethylenisch ungesättigten Carbonsäuren und anderen Alkylestern, abgeleitet aus Umsetzungen von Alkanolen mit 4-20 Kohlenstoffatomen mit ethylenisch ungesättigten Carbonsäuren, Alkylarylestern von ethylenisch ungesättigten Carbonsäuren, ungesättigten Amiden, α-Olefinen mit mindestens 8 Kohlenstoffatomen, Vinylalkylaten, in denen Alkyl mindestens 8 Kohlenstoffatome aufweist, N-Vinylamiden und Arylalkylstyrolen.

4. Verfahren nach einem der vorstehenden Ansprüche,
**dadurch gekennzeichnet,**
daß es weiterhin enthält:
(4) Entfernen des Wassers aus der Suspension,
(5) Zusetzen des Netzmittels, das die Oberflächenspannung (ermittelt mit einem Standardverfahren) einer darüberstehenden Flüssigkeit nicht unter 56 Dyn/cm verringert, in einer ausreichenden Menge, um die Wasseranlagerungsgeschwindigkeit der Perlen zu verbessern, und
(6) Trocknen der Perlen und
wobei das teilchenförmige Material, das einen hydrophoben Charakter hat, ein hydrophobes pyrogenes Siliziumdioxid und das Polymer mit im wesentlichen hydrophobem Charakter ein Copolymer von Acrylsäure und Laurylmethacrylat ist.

5. Verfahren nach einem der vorstehenden Ansprüche,
**dadurch gekennzeichnet,**
daß die Perlen durch Polymerisieren der wasserlöslichen Monomeren in Gegenwart eines Vernetzungsmittels vernetzt werden.

6. Verfahren nach einem der vorstehendne Ansprüche,
**dadurch gekennzeichnet,**
daß die Menge an Suspendiermittel im Bereich von 0,05-10 Gew.-%, bezogen auf die Menge des zu polymerisierenden, wasserlöslichen Monomeren, beträgt und das Netzmittel während einer Zeit von 1-30 Minuten zugesetzt wird.

7. Verfahren zum Verbessern der Wasseranlagerungsgeschwindigkeit von wäßrige Flüssigkeiten absorbierenden Perlen aus einer Wasser-in-Öl-Suspensionspolymerisation von wasserlöslichen Monomeren durch
(1) Vorlegen einer wäßrigen Phase, die Wasser und mindestens ein wasserlösliches Monomer enthält,
(2) Vorlegen einer inerten hydrophoben flüssigen Ölphase von halogenierten, aromatischen oder aliphatischen Kohlenwasserstoffen und einem Suspendiermittel,
(3) Inberührungbringen der wäßrigen Phase mit der Ölphase unter Bedingungen, unter denen eine Wasser-in-Öl-Suspension von Polymer, das polymerisiertes wasserlösliches Monomer enthält, geschaffen wird, wobei beim Verfahren oberflächenaktive Mittel, die die Wasserabsorption des Polymeren hemmen, ausgeschlossen sind,
(4) Entfernen des Wassers aus der Suspension, um eine die Perlen enthaltende Ölphase zurückzulassen,
**dadurch gekennzeichnet,**
daß das Suspendiermittel eine Kombination enthält von
(a) hydrophobem pyrogenen Siliziumdioxid und
(b) einem Copolymer von Acrylsäure und Laurylmethacrylat,
und das Verfahren weiterhin einschließt:
(5) Zusetzen zur Ölphase eines Netzmittels, das die Oberflächenspannung (ermittelt mit einem Standardverfahren) einer darüberstehenden Flüssigkeit nicht unter 56 Dyn/cm verringert, in einer ausreichenden Menge, um die Wasseranlagerungsgeschwindigkeit der Perlen zu verbessern, und
(6) Trocknen der Perlen.

8. Suspendiermittel, das für Suspensionspolymerisationsverfahren geeignet ist,
**dadurch gekennzeichnet,**
daß das Suspendiermittel enthält (1) eine Kombination von teilchenförmigem Material mit hydrophobem Charakter und (2) einem Polymer mit im wesentlichen hydrophobem Charakter, wobei das Polymer an der Hauptkette hängende hydrophobe Gruppen aufweist.

9. Suspendiermittel nach Anspruch 8,
**dadurch gekennzeichnet,**
daß das teilchenförmige Material mit hydrophobem Charakter hydrophobes pyrogenes Siliziumdioxid und das Polymer mit im wesentlichen hydrophobem Charakter ein Copolymer von Acrylsäure und Laurylmethacrylat ist.

## Revendications

1. Procédé de polymérisation en suspension de monomères solubles dans l'eau, comprenant :
(1) la fourniture d'une phase aqueuse comprenant de l'eau et au moins un monomère soluble dans l'eau,
(2) la fourniture d'une phase huileuse liquide hydrophobe inerte, constituée d'hydrocarbures halogénés, aromatiques ou aliphatiques, et d'un agent de mise en suspension,
(3) la mise en contact de la phase aqueuse et de la phase huileuse, dans des conditions telles que l'on obtienne une suspension de polymère, du type eau-dans-l'huile, ledit procédé excluant des agents tensioactifs qui inhibent la capacité d'absorption d'eau dudit polymère,
procédé caractérisé en ce que ledit agent de mise en suspension comprend une combinaison de :
(a) un produit sous forme de particules, de caractère hydrophobe, et
(b) un polymère ayant un caractère nettement hydrophobe, ledit polymère renfermant des fragments hydrophobes attachés, ledit agent de mise en suspension étant pratiquement soluble dans ladite phase huileuse.

2. Procédé selon la revendication 1, caractérisé en ce que l'agent de mise en suspension comprend (a) un dioxyde de silicium fumé hydrophobe et (b) un copolymère d'acide acrylique et de méthacrylate de lauryle.

3. Procédé selon la revendication 1 ou 2, caractérisé en ce que le polymère ayant un caractère nettement hydrophobe est issu de monomères choisis parmi les esters d'alkyle supérieur d'acides carboxyliques α,β-éthyléniquement insaturés et autres esters d'alkyle provenant des réactions d'alcanols ayant de 4 à 20 atomes de carbone avec des acides carboxyliques éthyléniquement insaturés, les esters d'alkylaryle d'acides carboxyliques éthyléniquement insaturés, les amides insaturés, les α-oléfines ayant au moins 8 atomes de carbone, les alcanoates de vinyle dans lesquels le groupe alkyle a au moins 8 atomes de carbone, les N-vinyl amides et les arylalkylstyrènes.

4. Procédé selon l'une quelconque des revendications précédentes, caractérisé en ce qu'il comprend en outre :
(4) l'élimination de l'eau de la suspension,
(5) l'addition d'un agent mouillant qui ne réduit pas la tension superficielle d'un liquide surnageant, déterminée par une méthode d'essai normalisée, à une valeur inférieure à 56 dynes/cm, en une proportion suffisante pour améliorer la vitesse d'hydratation des perles, et
(6) le séchage des perles,
et en ce que le produit sous forme de particules ayant un caractère hydrophobe est du dioxyde de silicium fumé hydrophobe et le polymère ayant un caractère nettement hydrophobe est un copolymère d'acide acrylique et de méthacrylate de lauryle.

5. Procédé selon l'une quelconque des revendications précédentes, caractérisé en ce que lesdites perles sont réticulées par polymérisation des monomères solubles dans l'eau en présence d'un agent de réticulation.

6. Procédé selon l'une quelconque des revendications précédentes, caractérisé en ce que la proportion d'agent de mise en suspension est comprise dans l'intervalle allant de 0,05 à 10% en poids par rapport à la quantité de monomères solubles dans l'eau qui est polymérisée, et en ce que l'agent mouillant est ajouté en l'espace de 1 à 30 minutes.

7. Procédé pour l'amélioration de la vitesse d'hydratation de perles absorbant des liquides aqueux, provenant d'une polymérisation en suspension du type eau-dans-l'huile de monomères solubles dans l'eau, qui comprend :
(1) la fourniture d'une phase aqueuse renfermant de l'eau et au moins un monomère soluble dans l'eau,
(2) la fourniture d'une phase huileuse liquide hydrophobe inerte, constituée d'hydrocarbures halogénés, aromatiques ou aliphatiques, et d'un agent de mise en suspension,
(3) la mise en contact de la phase aqueuse et de la phase huileuse dans des conditions telles que l'on obtienne une suspension, du type eau-dans-l'huile, de polymère renfermant le monomère soluble dans l'eau polymérisé, ledit procédé excluant des agents tensioactifs qui inhibent la capacité d'absorption d'eau dudit polymère,
(4) l'élimination de l'eau de la suspension pour l'obtention d'une phase huileuse contenant les perles,
caractérisé en ce que ledit agent de mise en suspension comprend une combinaison de :
(a) du dioxyde de silicium fumé hydrophobe, et
(b) un copolymère d'acide acrylique et de méthacrylate de lauryle,
et en ce que ledit procédé comprend en outre :
(5) l'addition à la phase huileuse d'un agent mouillant qui ne réduit pas la tension superficielle d'un liquide surnageant, déterminée par une méthode d'essai normalisée, à une valeur inférieure à 56 dynes/cm, en une proportion suffisante pour améliorer la vitesse d'hydratation des perles, et
(6) le séchage des perles de polymère.

8. Agent de mise en suspension, utile dans des procédés de polymérisation en suspension, caractérisé en ce qu'il comprend une combinaison de (1) un produit sous forme de particules, ayant un caractère hydrophobe, et (2) un polymère ayant un caractère nettement hydrophobe, ledit polymère ayant des fragments hydrophobes attachés à son squelette.

9. Agent de mise en suspension selon la revendication 8, caractérisé en ce que ledit produit sous forme de particules, ayant un caractère hydrophobe, est du dioxyde de silicium fumé hydrophobe et ledit polymère ayant un caractère nettement hydrophobe est un copolymère d'acide acrylique et de méthacrylate de lauryle.
